# EUROPEAN PATENT APPLICATION

(11) **EP 2 226 234 A1**
(43) Date of publication of application: **08.09.2010**
(21) Application number: 10386005.2
(22) Date of filing: 23.02.2010
(51) Int. Cl.: B62D 5/00

(54) **Aiding mechanism of a vehicle steering system for motion transmission of continuous variable transmission ratio by the use of planets and gears**

(30) Priority: 06.03.2009 GR 20090100130
(71) Applicant: Mastrokalos, Antonios, 84003 Sifnos (GR)
(72) Inventor: Mastrokalos, Antonios, 84003 Sifnos (GR)

(57) **Abstract**

Aiding mechanism of a vehicle steering system with continuous variable motion transmission ratio by the use of planets and gears. The mechanism is arranged between the axis of the steering wheel (2) and the axis of the rack (3), and serves in aiding the driver during driving. An alteration in the ratios is effected by the displacement of the middle shaft (29) of the gears from the medial vertical and the coupling of different teeth of the planet (13) with the input (11) and output (14) disks. The displacement is achieved by an electric motor (16), or a double-acting hydraulic cylinder (34), which transfers its motion to a control arm (23) that then converts it into linear motion.

## Description

The invention relates to an aiding mechanism for the direction system of all kinds of wheeled vehicles by the use of a planetary system, which provides a continuous variable transmission ratio of the motion by gears. In this way, infinite ratio positions in the direction systems are created.

Until now, the principle underlying all the known direction systems consists in the use of a belt so that essentially infinite number of transmission ratios are created or the use of gears providing specific ratios to the driver, which are characterised by an accuracy that allows the maximum possible safety under dangerous, potentially necessary maneuvering. The use of a belt provides a box with infinite number of ratios, however a potential "sliding" of the belt significantly reduces the application of such a system. On the other side, the use of a box with specific ratios between gears allows the driver to handle his car safely, however with a lack in variability between infinite number of transmission ratios, depending on the conditions of the street or the condition of the driver, which a box of infinite number of ratios provides. The manufacturers and the drivers are obliged to select between the accuracy provided by a box using gears and having specific ratios, and the variability provided by a box having infinite positions.

The present invention addresses the problem by the creation of a planetary direction system, characterised by a continuous variable transmission ratio, with the use of gears. This system allows on one side the desired accuracy during handling, since gears of parabolic configuration are used, and on the other side an infinite number of ratios are provided. In the direction system provided by the present invention, all the components are arranged in an axial direction on the central unit, and not radially as in other boxes. The position of the specific system is between the steering wheel bar and the rack or any other selected system, so that it mediates and transfers the commands to the direction control bars. Aim of the said system is to intervene depending on the existing conditions of the street or on the driver's behaviour, and to provide the necessary aid to achieve a full control on the vehicle. For this purpose, a central unit will process the information received from the traction, lateral-sliding, speed or lateral wind sensors in order to intervene on the direction system to the necessary degree.

The present invention essentially provides a system, which acts either as an underdrive unit or an overdrive unit, so that it provides an increased or decreased aid on the steering wheel. This is effected by the use of gears having a parabolic configuration, which are arranged peripherally to the housing of the system and which rotate around their axis. These gears, depending on the command received from the central processing unit, engage on the teeth of the central disk, which has a concave form and thus the desired ratio is achieved on the box. It is obvious that the number of ratios is limited only by the geometrical dimensions as desired or required depending on the application.

The underlying principle of the system is the following. At an intermediate speed, the transmission ratio of the steering wheel remains constant so that the driver has a "common" steering wheel. At very high speeds, the steering wheel becomes increasingly "slow", particularly when it is at the straight position. During maneuvering, the steering wheel at first behaves as the one of a common vehicle moving on a straight line. However, when the wheels start to turn, the system intervenes to gradually accelerate the turning of the wheels, exactly as a rack having a large transmission ratio difference from the center to its ends would effect. In the cases regarding fast driving, on roads with continuous turns, the system multiplies the command received from the steering wheel and at the same time reduces -to a certain degree- the aid. Thus the driver has a fast steering wheel responding directly to the received commands. In order to have the desired results with the continuous control of the steering wheel depending on the individual requirements, an electric motor and its servomechanism are involved. Thus, in cases when a "common" steering wheel is desired, the electric engine remains inactive. On the other hand, when a steering wheel with a slower of faster response is required, the electric motor intervenes and its effect is removed or added, thereby reducing or increasing the transmission ratio respectively.

These and other characteristics, as well as advantages of the present invention will become apparent by the following detailed description. The invention will be fully understood with reference to the accompanying figures, which depict an exemplary embodiment thereof.

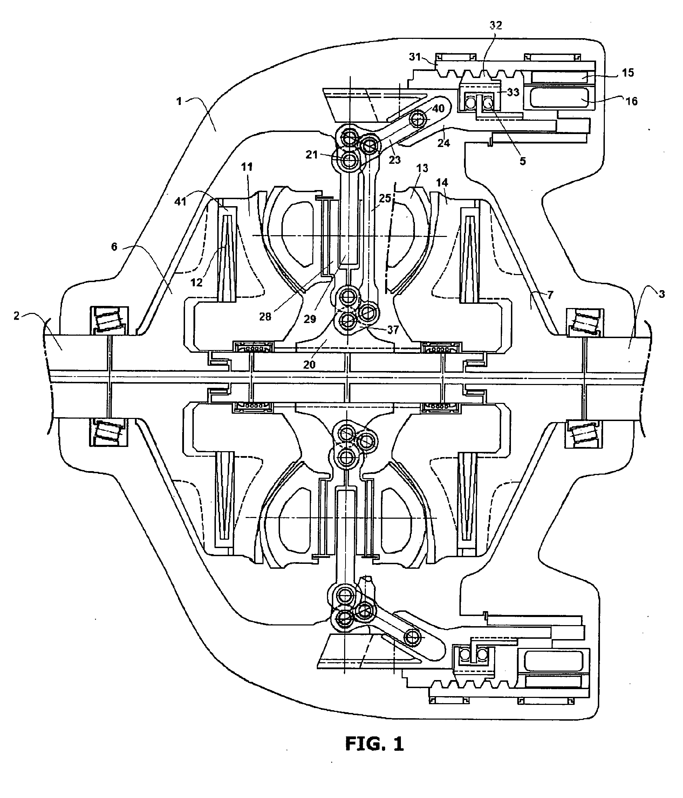

Figure 1 shows a vertical cross-section of the planetary direction system, with a motion transmission having a continuous variable ratio, using gears.

Figure 2 shows in front view a part of the housing, the arms and the connecting bars for the proper operation of the unit.

Figure 3 shows in plan view the ratio control arm, which is arranged on the housing of the unit and which transforms the command received from the electric motor to linear motion, so that it alters the rotation axis of the gears and consequently causes the variation of the revolutions.

Figure 4 shows a plan view of the central arm.

Figure 5 shown the front view of the unit, with the arms, the connecting bars and the spline joint of their central part.

Figure 6 shows a longitudinal cross-section of the housing (1) with its opening (17) and the fork element (24) with the dovetail (42) and the extension thereof (43),

Figures 7-9 show in cross-section three connection modes of the parts of figure 6.

Figure 10 shows in perspective view a part of the fork element (24) with the dovetails (42) and the extension thereof (43).

Figure 11 shows in side view the housing (1) and a tooth of the plate (13), and how this tooth moves on the input or output disks.

Figures 12-14 depict the position of the arms (24) with the connecting bars (25) and the deviation of the medial shaft (29) from the vertical position depending on the coupling of the plate (13) with the input and output disks.

Figure 15 shows in side view a variation of the invention where the ratio variation effector is a double-action hydraulic cylinder.

Figure 16 shows in front view a part of the direction system with the arms, the hydraulic cylinder and the special slot in which a specific protrusion slides.

Referring to the accompanying figures, a preferred embodiment of the invention will be described.

The motion transmission system of a wheeled vehicle is based on the following simplified principle. The steering wheel transfers through its bar the operation to the rack of the vehicle, and by the intervention of a transmission box which depending on the selected ratio engages to respective gears. In the planetary direction system, with a motion transmission characterized by a continuous variable transmission ratio, with gears described herein, the transmission of the commands received from the shaft (2) of the steering wheel to the axis of the rack (3) is aided by a rotor (15) of the electric motor (16). In this way, when the steering wheel has an increased revolution number, i.e. it is suitable for maneuvering, the electric motor (16) is activated and transfers its motion through the thread (31) to the thread of the adaptor (32), which is fixed on a carrier (33) by means of rolling bearings (5). Thus the sum of the energy of the electric motor and the energy of the steering wheel reaches the rack and thereafter the wheels. In order to have motion transmission from the thread (31) to the shaft of the steering wheel (2), the rotational motion of the electric motor (16) must be converted to linear motion, so that the fork element (24) is entrained from its perpendicular potion. The fork element (24) is connected to the arm (23) by a connection pin (40), so that a torque couple is created. Thus the motion of the torque couple results in the motion of the medial shaft (29), due to the connection of the latter with the torque couple through the pin (21), which in combination with the external shaft (28) and the center arm (37) are supported on the element (20), which constitutes the central support point of the shafts of the planet. The connecting bars (25) finally convert the signal to angular alteration of the position of the shaft of the planets. As a result, the gears engage with other diametrical points of the planets and thus the system is aided by the electric motor for faster or slower response of the steerage system, as required.

As regards the classical motion transmission system, the input unit (6) transfers the motion from the shaft of the steering wheel (2) through conical springs (12) and grooves (41) on the input disk (11). This is engaged by teeth with the planet (13) at an individually selected diameter. Therefrom, the motion is transferred to the output disk (14), which in this way transfers its motion to the output unit (7). Finally, the motion command from the bar of the steering wheel (2) ends to the shaft (3) of the rack and therefrom to the wheels. If the electric motor is activated on the wheels, the sum or the difference of the motion of the steering wheel and the electric motor is obtained, depending on the individual requirements, while if it is inactivated on the wheels only the motion of the bar of the steering wheel is obtained, as in the conventional steerage systems.

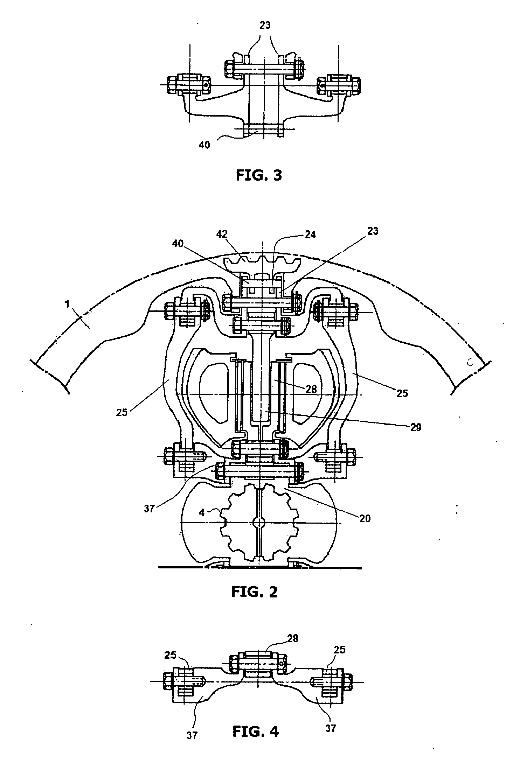

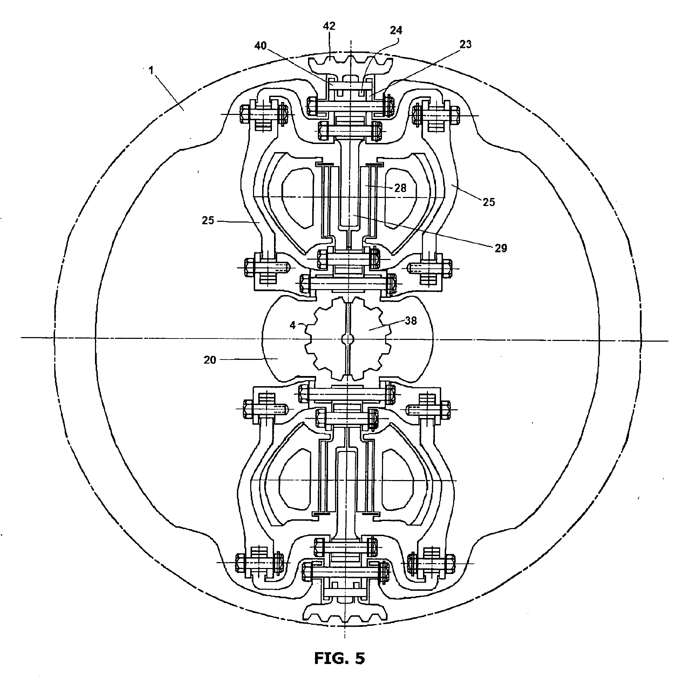

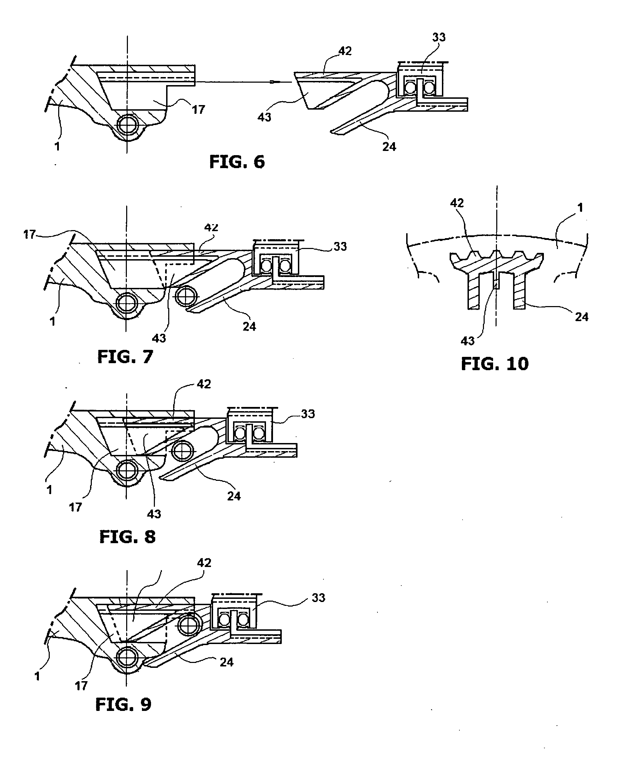

The front view of the system, figure 2, allows a full understanding of its operation. The unit is arranged in the housing (1), at the upper part of which the arm (23) is arranged which serves in converting the motion received from the electric motor (16) to linear. In this way, an angular alteration of the shaft of the planets is obtained, and thus a change in the revolutions. The arm is connected through the pin (40) to the fork element (24), which at its end has a dovetail shape (42), the extension (43) of which, figure 6, contributes in the reduction of play and the accurate output of the commands. At the lower part of figure 2, the center arm (37) is apparent, a plan view of which is depicted in figure 4, the center arm along with the arm (23) and the connecting bars (25) forming a trapezium in which the shaft (28) and the axis (29) slide, transferring the motion through the element (20) and therefrom to the rack (3). The spline joint (4), figure 5 as shown also in this general perspective illustration of the system, holds the element (20) with the intermediate beam (38), which serves only in the central fixing of the system of planets with their accessories.

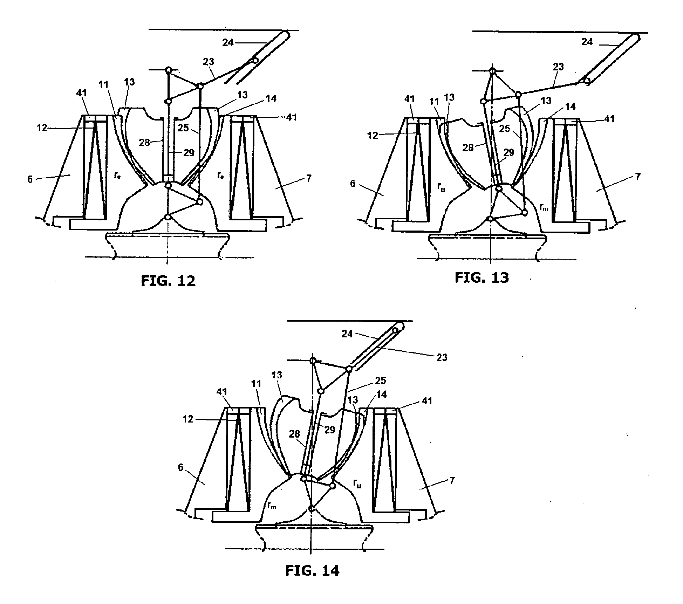

For better understanding of the invention and its operation parameters, some figures depicting specific details of the system and regarding the motion transfer from the electric motor (16) to the remaining direction system will be described. Figure 6 shows the two parts, the housing (1) of the unit and the carrier of the adaptor (33). As also shown in figures 7-9, the dovetail (42) along with its extension (43) move in the opening (17) of the housing (1) of the unit. It is apparent that this motion is effected by the electric motor (16). Thus, if the engagement ratio of the gears of the planet (13) with the gears of the input disk (11) is at its maximum value, then the ratio of the gears of the planet (13) with the gears of the output disk (14) has its minimum value. Apparently, the electric motor offers the maximum possible aid on the steerage system, increasing the revolutions of the steering wheel. For the full understanding of the motion of the arms (23) and the positions of the connecting bars (25), figure 13 shows the deviation of the medial axis (29) from the vertical, as well as the engagement of the gears of the planet (13) with the gears of the input (11) and output (14) disks. The minimum engagement radius between the gears of the planet (13) with the gears of the output disk (14) is depicted as rm, while the maximum radius of the gears of the planet (13) with the gears of the input disk (11) is depicted as rM. Contrary to figure 9, we have the opposite case, wherein the engagement ratio of the gears of the planet (13) with the gears of the input disk (11) has the minimum possible value, while the ratio of the gears of the planet (13) with the gears of the output disk (14) has the maximum value. Thus the electric motor operates so that the steerage system presents the maximum possible resistance to the received variation, presenting a "slower" steering wheel to the driver. In detail, the motion of the arms (23) and the connecting bars (25), as regards the present case, is shown in figure 14, wherein the maximum connection radius is now between the gears of the planet (13) with the gears of the output disk (14), while the minimum radius is between the gears of the planet (13) with the gears of the input disk (11). Finally, figure 8 and figure 12 shows an intermediate condition, wherein the electric motor (16) holds the system and does not act on the thread of the adaptor (32), and thus the motion is not transferred to the carrier (33). Thus the engagement ratio of the gears of the planet (13) with the gears of the input disk (11) has the same value with the ratio of the gears of the planet (13) with the gears of the output disk (14), and apparently the engagement radii re are equal. In this way, the motion is transferred to the axis of the rack (3), in 1:1 ratio, and the direction system reacts as a conventional steerage system, since the deviation of the medial axis (29) from the vertical is zero. Figure 10 shows in perspective a part of the carrier of the fork elements (24), wherein in more detail the dovetails (42) with their extensions (43) are shown, which aim at reducing the tolerances and accurately outputting of the commands.

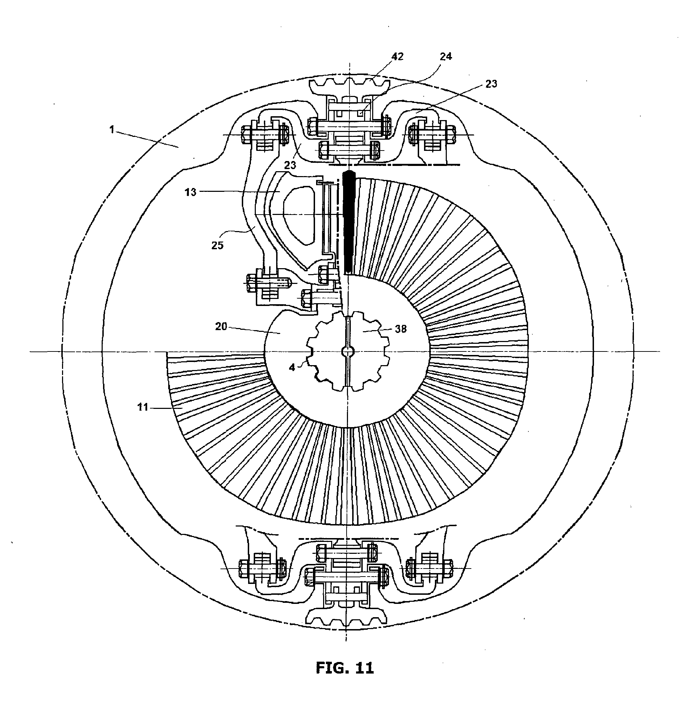

Figure 11 shows in side view a partial projection of a gear of the planet (13), and the way this gear, enters and slides between the teeth of one of the disks, input (11) and output (14). The connecting bar (25), the fork element (24) with the dovetail (42), and the spline joint (4) with the element (20) and the intermediate beam (28) are shown, the operation of which has already been described.

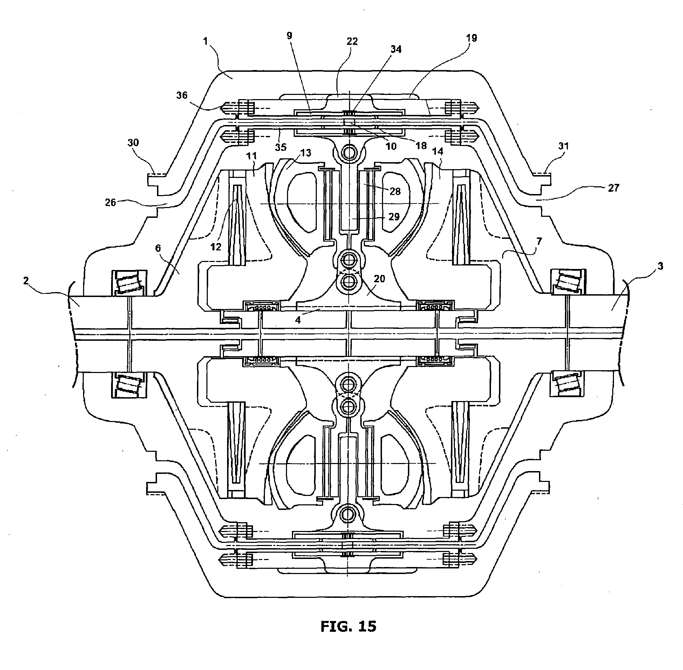

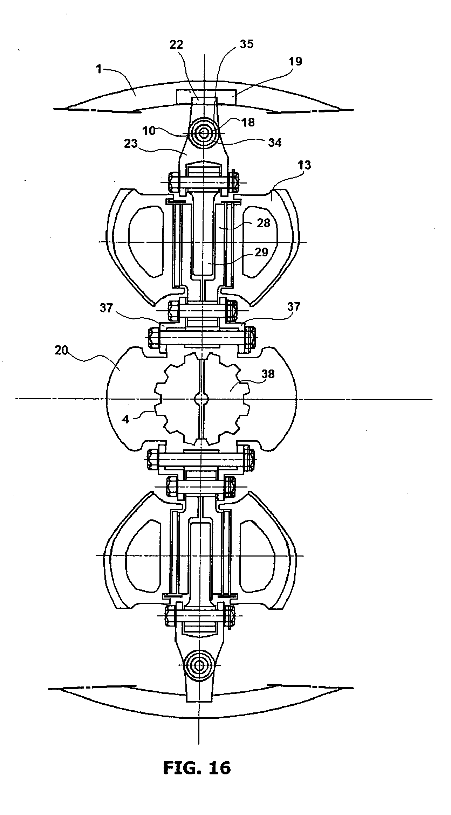

In another exemplary embodiment of the invention, as control unit of the system a double-acting hydraulic cylinder (34), figure 15, is alternatively used. The hydraulic cylinder operates under the effect of oil, which is guided through pipes screwed on the threads (30), (31), and flows through the guides (26), (27), depending on the command received from the central control unit. Therefrom, the oil is guided to the areas (9) of the hydraulic cylinder (34), through holes (18) on the tubular rods (35) and reaches the interior of the cylinder (34). The rods (35) are fixed permanently on the housing (1) of the unit with screws (36), and they are separated between them by the diaphragm (10). In this way, when a command is given from the central unit for oil flow to the cylinder (34), the oil flows through the holes (18) in the areas (9), moving the cylinder (34) towards the opposite side. This forces the medial axis (29) to be displaced from its vertical position and thus change the ratio, since there is coupling between different teeth of the planet (13) with the input (11) and output (14) disks. Finally, the cylinder (34) has a special protrusion (22) which, moves in a special slot (19) of the housing (1), figure 16. This device prevents the deviation of the motion of the cylinder (34) from the smooth linear motion, which would result to the rotation of the cylinder during the ratio alteration.

It should be noted that the description of the invention is given with an exemplary, non-limiting, embodiment. Thus, any alteration or modification regarding the figures, manufacturing and assembling materials and components used, is considered as emcompassed in the scope of the present invention, as long as they do not constitute new inventive step.

## Claims

1. Aiding mechanism of a vehicle direction system for the transmission, with a continuous variable transmission ratio, of motion by the use of planets and gears, **characterised in that** it allows a continuous motion transmission control, and it acts, by means of an electric motor (16), the rotor (15) of which provides via a thread (31) the necessary aid for the motion of the adaptor (32) and consequently of the medial axis (29) by the command applied on the axis of the rack (3), entraining the torque couple formed by the fork element (24) with the arm (23), which converts the command to linear motion, causing an angular variation of the axis of the planets and thus a change in revolutions, due to the coupling of different teeth of the planet (13) with the input (11) and output (14) disks and also acts on the axis of the steering wheel (2) and applies or removes its action.

2. Aiding mechanism of a vehicle direction system for the transmission, with a continuous variable transmission ratio, of motion by the use of planets and gears, according to claim 1, **characterised in that** it has a dovetail (42) with extension (43), which by the action of the rotor (15) of the electric motor (16) moves in the opening (17) of the housing (1), contributing in the reduction of possible plays and in the accurate output of the commands of the central unit.

3. Aiding mechanism of a vehicle direction system for the transmission, with a continuous variable transmission ratio, of motion by the use of planets and gears, according to claim 1, **characterised in that** as control unit a double-acting hydraulic cylinder (34) is used, which by the action of oil passing through the holes (18) in the areas (9) moves towards the opposite side, in relation to the side where the oil inflows, displacing the medial axis (29) from the its vertical position.
